(19) Europäisches Patentamt
European Patent Office
Office européen des brevets

(11) EP 3 526 544 B1

(12) EUROPÄISCHE PATENTSCHRIFT

(45) Veröffentlichungstag und Bekanntmachung des Hinweises auf die Patenterteilung:
09.11.2022 Patentblatt 2022/45

(21) Anmeldenummer: 17780639.5

(22) Anmeldetag: 19.09.2017

(51) Internationale Patentklassifikation (IPC):
G01C 21/28 (2006.01)     G01S 19/42 (2010.01)
H04W 52/02 (2009.01)     G01S 19/34 (2010.01)
G01S 19/49 (2010.01)

(52) Gemeinsame Patentklassifikation (CPC):
G01C 21/28; G01S 5/017; G01S 19/34

(86) Internationale Anmeldenummer:
PCT/EP2017/073570

(87) Internationale Veröffentlichungsnummer:
WO 2018/072948 (26.04.2018 Gazette 2018/17)

(54) **VERFAHREN UND VORRICHTUNG ZUM ABTASTEN EINES STANDORTES**

METHOD AND DEVICE FOR SCANNING A LOCATION

PROCÉDÉ ET DISPOSITIF DE BALAYAGE D'UN SITE

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 17.10.2016 DE 102016220216

(43) Veröffentlichungstag der Anmeldung:
21.08.2019 Patentblatt 2019/34

(73) Patentinhaber: Robert Bosch GmbH
70442 Stuttgart (DE)

(72) Erfinder:
• WESTENDORF, Andreas
31137 Hildesheim (DE)
• BRUNNER, Dominik
74343 Sachsenheim (DE)
• GUPTA, Sanghmitra
70567 Stuttgart (DE)

(56) Entgegenhaltungen:
US-B1- 6 559 794

**Beschreibung**

Die vorliegende Erfindung betrifft ein Verfahren zum Abtasten eines Standortes. Die vorliegende Erfindung betrifft darüber hinaus eine entsprechende Vorrichtung, ein entsprechendes Computerprogramm sowie ein entsprechendes Speichermedium.

Stand der Technik

In Geowissenschaften und insbesondere Kartografie wird die eigene Position eines Beobachters oder Messinstrumentes auf der Erdoberfläche oder in einem geeigneten geometrischen Bezugssystem als Standort, Standpunkt oder Topozentrum bezeichnet. Die Bestimmung des Standortes ist dem Fachmann als Ortsbestimmung bekannt und bezieht sich in der Regel auf ein globales Koordinatensystem.

Unter dem Begriff "Track" wird in der Geoinformatik eine geordnete Liste derartiger Koordinaten verstanden, die eine zurückgelegte Strecke beschreiben. Hierzu bedarf es einer Abtastung (*sampling*) des zeitkontinuierlichen Positionssignales. Sofern diese Abtastung zu äquidistanten Zeitpunkten, also periodisch stattfindet, wird ihre Frequenz wie in der Signalverarbeitung als Abtastrate, Sampling-Rate oder Samplerate bezeichnet. Zur Komprimierung des resultierenden Tracks - ohne die Notwendigkeit einer Einbeziehung weiterer Geodaten - wird nach dem Stand der Technik typischerweise der Douglas-Peucker-Algorithmus eingesetzt, um einzelne Stichproben aus der Zeitreihe zu entfernen (*weeding*).

Bekannt ist es ferner, Bestimmung und Aufzeichnung des Ortes auf unterschiedliche, meist drahtlos verbundene Vorrichtungen zu verteilen. Als Standard für diese Übertragung wird typischerweise der auf CAN basierende NMEA 0183 eingesetzt.

EP2280240A2 offenbart ein Verfahren und eine Anordnung zur Erzeugung dynamischer Positionierungsinformationen. Das Verfahren und die Anordnung sind dadurch gekennzeichnet, dass ein erster und ein zweiter aufeinanderfolgender Zeitpunkt aus einer Anzahl von mindestens zwei Zeitpunkten, für die geografische Positionen erzeugt werden, durch ein Zeitintervall getrennt sind, wobei das Zeitintervall eine Länge hat, die auf der Grundlage einer Geschwindigkeit des Fahrzeugs dynamisch bestimmt wird. Dadurch können unterschiedliche Zeitintervalle zwischen aufeinander folgenden Zeitpunkten, zu denen Positionierungsinformation bestimmt wird, ermöglicht werden, da die Länge jedes Zeitintervalls von einer Geschwindigkeit des Fahrzeugs oder einer Fahrtrichtung des Fahrzeugs abhängt. Dadurch wird die Positionierungsinformations-Erzeugung und die Menge der erzeugten Daten optimiert.

Das Dokument US 6,559,794 zeigt ein Positionsbestimmungssystem, welches eine Positionsbestimmungseinheit, eine Anzeigeeinheit und eine Steuerung umfasst. Die Positionsbestimmungseinheit bestimmt die Position eines beweglichen Objekts basierend auf Positionsinformationen, die von GPS-Satelliten gesendet werden.

Offenbarung der Erfindung

Die vorliegende Erfindung stellt ein Verfahren zum Abtasten eines Standortes, eine entsprechende Vorrichtung - etwa in Gestalt eines Telematik-Steuergerätes für ein Kraftfahrzeug -, ein entsprechendes Computerprogramm sowie ein entsprechendes Speichermedium gemäß den unabhängigen Ansprüchen bereit.

Ein Vorzug dieser Lösung liegt in der durch eine Reduzierung der abgetasteten Daten und unwesentlichen Punkte erzielten Datenkomprimierung. Der erfindungsgemäße Ansatz fußt hierzu auf dem Grundgedanken, Daten bei geringeren Geschwindigkeiten (zum Beispiel innerhalb der Stadt) häufiger zu übertragen als bei höheren Geschwindigkeiten (zum Beispiel auf Autobahnen). Diesem Gedanken wiederum liegt die Erkenntnis zugrunde, dass es beispielsweise beim Fahren innerhalb einer Stadt schwierig ist, die von einem Auto zurückgelegte Strecke zu erfassen, wenn dessen GPS-Position lediglich in einem Abstand von 5 Minuten abgefragt wird, während eine Datenübertragung im Minutentakt bei der Fahrt auf einer Autobahn zu redundanten Daten führt. Mit einer dynamischen Abtastung können mehr Informationen aus einer geringeren Anzahl von Stichproben gewonnen werden, was zu einer Datenkompression führt.

Mit der beschriebenen Idee werden die Anforderungen an die zum Abtasten eines Standortes benötigte integrierte Elektronik im Hinblick auf ihre Verarbeitungsleistung und Speicherfähigkeit verringert und Abhängigkeiten von - potenziell unzuverlässigen - digitalen Kartendaten eliminiert. Außerdem wird eine Reduzierung der Übertragungskosten erzielt, da weniger Daten übertragen werden.

Durch die in den abhängigen Ansprüchen aufgeführten Maßnahmen sind vorteilhafte Weiterbildungen und Verbesserungen des im unabhängigen Anspruch angegebenen Grundgedankens möglich.

Kurze Beschreibung der Zeichnungen

Ausführungsbeispiele der Erfindung sind in den Zeichnungen dargestellt und in der nachfolgenden Beschreibung näher erläutert. Es zeigt:

Figur 1 das Flussdiagramm eines Verfahrens gemäß einer ersten Ausführungsform.

Figur 2 die Abhängigkeit der zeitlichen Auflösung einer Standortbestimmung von der Geschwindigkeit eines exemplarischen Fahrzeuges.

Figur 3 schematisch ein Telematik-Steuergerät gemäß einer zweiten Ausführungsform.

Ausführungsformen der Erfindung

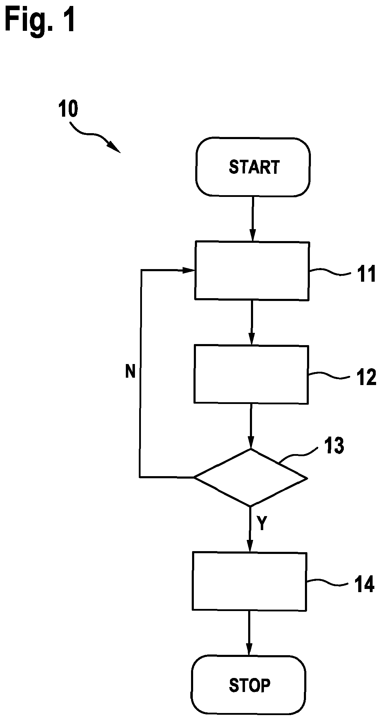

Figur 1 illustriert über einen einzelnen Abtastzyklus den grundlegenden Ablauf eines erfindungsgemäßen Verfahrens (10), dessen Schritte nun am Beispiel der Ortsbestimmung in einem Fahrzeug erläutert seien. Zunächst misst das Fahrzeug in diesem Szenario seine Eigengeschwindigkeit (Prozess 11) und erhöht abhängig von der Eigengeschwindigkeit einen Zähler (Prozess 12). Sodann prüft es, ob der Zähler einen vorbestimmten Schwellenwert erreicht (Entscheidung 13). Ist diese Bedingung erfüllt (Zweig Y), so nimmt das Fahrzeug eine Ortsbestimmung vor (Prozess 14) und verarbeitet dies weiter. Die weitere Verarbeitung kann entweder innerhalb des Speichermeidens oder außerhalb, in dem die Daten über einen drahtgebunden oder drahtlosen Kommunikationsweg (zum Beispiel über eine Luftschnittstelle) übertragen werden, stattfinden. Bleibt der Zähler jedoch hinter besagtem Schwellenwert zurück, so wiederholt das Fahrzeug zu gegebener Zeit die ausgeführten Schritte beginnend mit einer erneuten Messung (11).

Um einen akzeptable Kompression zu erreichen, sind in einer entsprechenden Software bestimmte Gewichtsfaktoren definiert, die als Basis für die gewünschte Abtastauflösung dienen. Diese Gewichtsfaktoren sind flexibel und können in der Software modifiziert und jederzeit - auch über die Luftschnittstelle - konfiguriert werden.

Exemplarisch mag die gewünschte Datenauflösung wie folgt definiert sein:

| Geschwindigkeitsbereich (km/h) | Typischer Nutzungsbereich | Gewünschte Auflösung (km) |
|---|---|---|
| 0-50 | Geschlossene Ortschaft | 0,2 - 1 |
| 50 - 100 | Bundesstraße | 1-6 |
| 100 - 250 | Autobahn | 6-10 |

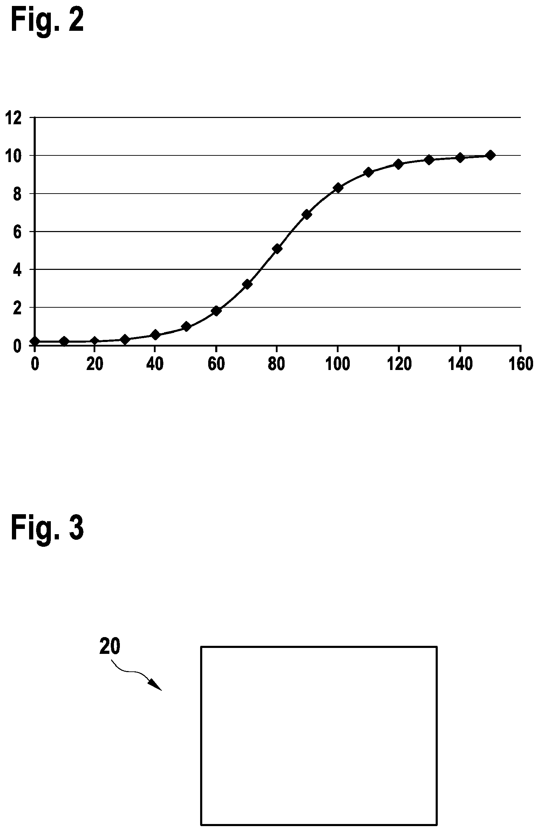

Im Bestreben, die solchermaßen definierte Beziehung zwischen Geschwindigkeit und gewünschter Auflösung zu generalisieren, trägt man die Auflösung in km gegen die Geschwindigkeit in km/h auf, nimmt eine Kurvenanpassung auf Grundlage des Tangens Hyperbolicus vor und gelangt so zum Funktionsgraph gemäß Figur 2.

Bezeichnet man die gewünschte Mindestauflösung als a, Höchstauflösung als b und Fahrgeschwindigkeit als $v$, so lässt sich bei Wahl einer geeigneten konstanten Größe c die folgende verallgemeinerte Beziehung für die Auflösung $R_n$ ableiten:

$$R_n = \frac{1}{10}\left((a+b) + (b-a)\tanh\frac{v - v_0}{c}\right)$$

Der Gewichtsfaktor $G_n$ genügt somit folgender Gleichung:

$$G_n = \frac{T v_n}{R_n}$$

Um eine geschwindigkeitsabhängige Abtastrate zu bestimmen, wird jedem Wert der Geschwindigkeit ein bestimmter Gewichtsfaktor zugeordnet. Für jede Geschwindigkeit $v_1$ bis $v_n$, die sekündlich abgefragt wird, wird der entsprechende Gewichtsfaktor $G_1$ bis $G_n$ ausgewählt und verwendet, um einen Zähler mit dem ausgewählten Gewichtsfaktor zu erhöhen. Sobald der Zähler einen vordefinierten Schwellenwert T erreicht, werden die Daten übertragen und der Zähler wird auf null zurückgesetzt. In diesem Fall wird der Standort mittels GPS oder eines anderweitigen globalen Navigationssatellitensystems (GNSS) ermittelt und übertragen.

Der Schwellenwert T ist hierbei so gewählt, dass der Zähler ihn nach dem beschriebenen Verfahren (10) erreicht, wenn - bei gegebener Geschwindigkeit - eine der gewünschten räumlichen Auflösung entsprechende Strecke zurückgelegt wurde, also nach der folgenden Fahrzeit:

$$t_n = \frac{R_n}{v_n}$$

Der Schwellenwert lässt sich somit als kleinstes gemeinsames Vielfaches der Werte $t_1$ bis $t_{25}$ gemäß folgender Umsetztabelle (*lookup table,* LUT) bestimmen:

| $n$ | $v_n$ | $R_n$ | $t_n$ | $G_n$ |
|---|---|---|---|---|
| 1 | 0 - 10 km/h | 0,1000 km | 72,00 s | 1,00 |
| 2 | 10 - 20 km/h | 0,3000 km | 72,00 s | 1,00 |
| 3 | 20 - 30 km/h | 0,5000 km | 72,00 s | 1,00 |
| 4 | 30 - 40 km/h | 0,7000 km | 72,00 s | 1,00 |
| 5 | 40 - 50 km/h | 0,9000 km | 72,00 s | 1,00 |
| 6 | 50 - 60 km/h | 1,3167 km | 86,18 s | 0,84 |
| 7 | 60 - 70 km/h | 2,1167 km | 117,23 s | 0,61 |
| 8 | 70 - 80 km/h | 2,9167 km | 140,00 s | 0,51 |
| 9 | 80 - 90 km/h | 3,7167 km | 157,41 s | 0,46 |
| 10 | 90 - 100 km/h | 4,5167 km | 171,16 s | 0,42 |
| 11 | 100 - 110 km/h | 5,625 km | 192,86 s | 0,37 |
| 12 | 110 - 120 km/h | 6,875 km | 215,22 s | 0,33 |
| 13 | 120 - 130 km/h | 8,125 km | 234,00 s | 0,31 |
| 14 | 130 - 140 km/h | 9,375 km | 250,00 s | 0,29 |

| 15 | 140 - 150 km/h | 10,625 km | 263,79 s | 0,27 |
|---|---|---|---|---|
| 16 | 150 - 160 km/h | 10,72 km | 248,98 s | 0,29 |
| 17 | 160 - 170 km/h | 10,76 km | 234,76 s | 0,31 |
| 18 | 170 - 180 km/h | 10,8 km | 222,17 s | 0,32 |
| 19 | 180 - 190 km/h | 10,84 km | 210,94 s | 0,34 |
| 20 | 190 - 200 km/h | 10,88 km | 200,86 s | 0,36 |
| 21 | 200 - 210 km/h | 10,92 km | 191,77 s | 0,38 |
| 22 | 210 - 220 km/h | 10,96 km | 183,52 s | 0,39 |
| 23 | 220 - 230 km/h | 11,00 km | 176,00 s | 0,41 |
| 24 | 230 - 240 km/h | 11,04 km | 169,12 s | 0,43 |
| 25 | 240 - 250 km/h | 11,08 km | 162,81 s | 0,44 |

Der Schwellenwert T ist frei definierbar, kann aber in Korrelation zu der Fahrzeit stehen. Zum Beispiel als kleinstes gemeinsames Vielfaches der Werte $t_o$ bis $t_n$.

Es versteht sich, dass Gewichtsfaktor und Schwellenwert entweder anhand einer vordefinierten Umsetztabelle (*lookup table,* LUT) vorgegeben oder in einer abweichenden Ausführungsform auch durch eine unmittelbare Berechnung der gewünschten Auflösung definiert werden können, ohne den Rahmen der Erfindung zu verlassen.

Um eine von der Genauigkeit der Abfragefrequenz - die obige Tabelle ist für eine Genauigkeit von 1 s ausgelegt - unabhängige Umsetztabelle zu definieren, kann der Ablauf wie folgt abgewandelt werden: Zunächst wird eine Umsetztabelle für eine hohe Abtastrate von beispielsweise 1000 Hz errechnet. In diesem Fall wäre in jeder Iteration die Differenz $\Delta t$ der aktuellen Zeit zum Zeitpunkt der letzten Abtastung als Berechnungsgrundlage heranzuziehen. Der Zähler wird sodann um das Produkt der Zeitdifferenz $\Delta t$ mit dem - der aktuellen Geschwindigkeit zugeordneten - Gewichtsfaktor erhöht.

Dieses Verfahren (10) kann beispielsweise in Software oder Hardware oder in einer Mischform aus Software und Hardware beispielsweise in einem Telematik-Steuergerät (20) implementiert sein, wie die schematische Darstellung der Figur 3 verdeutlicht.

**Patentansprüche**

1. Verfahren (10) zum Abtasten eines Standortes,

    mit folgenden Merkmalen:

    - zu vorbestimmten Zeitpunkten wird eine Eigengeschwindigkeit eines Fahrzeuges gemessen (11) und abhängig von der Eigengeschwindigkeit ein Zähler erhöht (12), wobei abhängig von der Eigengeschwindigkeit ein Gewichtsfaktor bestimmt wird und der Zähler abhängig von dem Gewichtsfaktor erhöht (12) wird, und
    - sobald der Zähler einen vorbestimmten Schwellenwert erreicht (13, Y), wird der Standort des Fahrzeuges bestimmt (14),

    **gekennzeichnet durch** folgende Merkmale:

    - der Eigengeschwindigkeit wird ein Geschwindigkeitsintervall unter mehreren vorbestimmten Geschwindigkeitsintervallen zugeordnet, welches die Eigengeschwindigkeit umfasst und
    - anhand des zugeordneten Geschwindigkeitsintervalls wird der Gewichtsfaktor aus einer Umsetzungstabelle ausgelesen.

2. Verfahren (10) nach Anspruch 1,
    **gekennzeichnet durch** folgende Merkmale:

    - der jeweilige Standort wird wahlweise über eine Luftschnittstelle übertragen und
    - die Umsetzungstabelle wird wahlweise über die Luftschnittstelle konfiguriert.

3. Verfahren (10) nach einem der Ansprüche 1 bis 2,
    **gekennzeichnet durch** folgende Merkmale:

    - die Zeitpunkte sind äquidistant und
    - der Zähler wird um den Gewichtsfaktor erhöht (12).

4. Verfahren (10) nach einem der Ansprüche 1 bis 2,
    **gekennzeichnet durch** folgende Merkmale:

    - aus dem Gewichtsfaktor und einer Zeitdifferenz des jeweiligen Zeitpunktes zu einem unmittelbar zurückliegenden Zeitpunkt unter den Zeitpunkten wird ein Produkt gebildet und
    - der Zähler wird um das Produkt erhöht (12).

5. Verfahren (10) nach einem der Ansprüche 1 bis 4,
    **gekennzeichnet durch** folgendes Merkmal:

    - der Standort wird mittels eines globalen Navigationssatellitensystems bestimmt (14).

6. Computerprogramm, welches eingerichtet ist, das Verfahren (10) nach einem der Ansprüche 1 bis 5 auf einem Steuergerät für ein Kraftfahrzeug auszuführen.

7. Maschinenlesbares Speichermedium, auf dem das Computerprogramm nach Anspruch 6 gespeichert ist.

8. Vorrichtung (20), insbesondere Telematik-Steuergerät für ein Kraftfahrzeug, die eingerichtet ist, das Verfahren (10) nach einem der Ansprüche 1 bis 5 auszuführen.

**Claims**

1. Method (10) for scanning a location,

   having the following features:

   - an intrinsic speed of a vehicle is measured (11) at predetermined points in time and a counter is incremented (12) as a function of the intrinsic speed, wherein a weighting factor is determined as a function of the intrinsic speed and the counter is incremented (12) as a function of the weighting factor, and
   - as soon as the counter reaches a predetermined threshold value (13, Y), the location of the vehicle is determined (14)

   **characterized by** the following features:

   - the intrinsic speed is assigned a speed interval among a plurality of predetermined speed intervals which includes the intrinsic speed, and
   - the weighting factor is read from a conversion table by using the associated speed interval.

2. Method (10) according to Claim 1,
   **characterized by** the following features:

   - the respective location is optionally transmitted via an air interface, and
   - the conversion table is optionally configured via the air interface.

3. Method (10) according to either of Claims 1 and 2, **characterized by** the following features:

   - the points in time are equidistant, and
   - the counter is incremented (12) by the weighting factor.

4. Method (10) according to either of Claims 1 and 2, **characterized by** the following features:

   - a product is formed from the weighting factor and a time difference of the respective point in time from an immediately preceding point in time among the points in time, and
   - the counter is incremented (12) by the product.

5. Method (10) according to one of Claims 1 to 4, **characterized by** the following feature:

   - the location is determined (14) by means of a global satellite navigation system.

6. Computer program, which is set up
   to carry out the method (10) according to one of Claims 1 to 5 on a control device for a motor vehicle.

7. Machine-readable storage medium on which the computer program according to Claim 6 is stored.

8. Device (20), in particular a telematics control device for a motor vehicle, which is set up to carry out the method (10) according to one of Claims 1 to 5.

**Revendications**

1. Procédé (10) de balayage d'un emplacement, comprenant les particularités suivantes :

   - une vitesse propre d'un véhicule est mesurée (11) à des instants prédéterminés, et un compteur est incrémenté (12) en fonction de la vitesse propre, dans lequel, en fonction de la vitesse propre, un facteur de pondération est déterminé et le compteur est incrémenté en fonction du facteur de pondération (12), et
- dès que le compteur atteint une valeur seuil prédéterminée (13, Y), l'emplacement du véhicule est déterminé (14),

**caractérisé par** les particularités suivantes :

- un intervalle de vitesse parmi plusieurs intervalles de vitesse prédéterminés, qui comprend la vitesse propre, est associé à la vitesse propre, et
- à l'aide de l'intervalle de vitesse associé, le facteur de pondération est lu dans une table de conversion.

2. Procédé (10) selon la revendication 1, **caractérisé par** les particularités suivantes :

- l'emplacement respectif est transmis au choix par l'intermédiaire d'une interface radio, et
- la table de conversion est configurée au choix par l'intermédiaire de l'interface radio.

3. Procédé (10) selon l'une quelconque des revendications 1 à 2, **caractérisé par** les particularités suivantes :

- les instants sont équidistants, et
- le compteur est incrémenté du facteur de pondération (12).

4. Procédé (10) selon l'une quelconque des revendications 1 à 2, **caractérisé par** les particularités suivantes :

- un produit est formé du facteur de pondération et d'une différence de temps de l'instant respectif par rapport à un instant immédiatement précédent parmi les instants, et
- le compteur est incrémenté du produit (12).

5. Procédé (10) selon l'une quelconque des revendications 1 à 4, **caractérisé par** la particularité suivante :

- l'emplacement est déterminé au moyen d'un système global de satellites de navigation (14).

6. Programme informatique qui est conçu pour exécuter le procédé (10) selon l'une quelconque des revendications 1 à 5 sur un appareil de commande pour un véhicule automobile.

7. Support de stockage lisible par machine sur lequel est stocké le programme informatique selon la revendication 6.

8. Dispositif (20), en particulier appareil de commande télématique pour un véhicule automobile, qui est conçu pour exécuter le procédé (10) selon l'une quelconque des revendications 1 à 5.

# Fig. 1

# Fig. 2

# Fig. 3

**20**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2280240 A2
- US 6559794 B